Europäisches Patentamt

European Patent Office

Office européen des brevets

(11) Publication number: **0 117 682 B1**

# EUROPEAN PATENT SPECIFICATION

(45) Date of publication of patent specification: **02.01.92**    (51) Int. Cl.⁵: **G06F 3/06**

(21) Application number: **84300958.0**

(22) Date of filing: **15.02.84**

(54) **Peripherally synchronized data transfer system.**

(30) Priority: **28.02.83 US 470377**

(43) Date of publication of application:
**05.09.84 Bulletin 84/36**

(45) Publication of the grant of the patent:
**02.01.92 Bulletin 92/01**

(84) Designated Contracting States:
**BE DE FR GB NL SE**

(56) References cited:
EP-A- 0 059 823        EP-A- 0 121 364
EP-A- 0 130 813        EP-A- 0 131 417
US-A- 4 162 520        US-A- 4 220 997
US-A- 4 293 928

IEEE TRANSACTIONS ON NUCLEAR SCIENCE, vol. NS-20, no. 1, February 1973, pages 685-690, Nuclear and Plasma Sciences Society; A.E. CAKES et al.: "A variable wordsize CAMAC tape controller"

THE RADIO AND ELECTRONIC ENGINEER, vol. 27, no. 1, January 1964, pages 65-73, Institution of Electronic and Radio Engineers, London, GB; D.B.G. EDWARDS et al.: "Design principles of the magnetic tape system for the Atlas computer"

(73) Proprietor: **UNISYS CORPORATION**
**1, Burroughs Place**
**Detroit Michigan 48232(US)**

(72) Inventor: **Sheth, Jayesh Vrajlal**
**25652 Rimgate Drive 5-F**
**El Toro CA 92630(US)**

(74) Representative: **Kirby, Harold Douglas Benson et al**
**G.F. Redfern & Company Marlborough Lodge**
**14 Farncombe Road**
**Worthing West Sussex BN11 2BT(GB)**

EP 0 117 682 B1

## Description

### FIELD OF THE INVENTION

This invention is related to systems where data transfers are effected between magnetic tape peripheral terminal units and a main host computer wherein an intermediate I/O subsystem involving a peripheral-controller is used to perform the housekeeping duties of the data transfer.

### BACKGROUND OF THE INVENTION

A continuing area of developing technology involves the transfer of data between a main host computer system and one or more peripheral terminal units. To this end, there have been developed I/O subsystems which are used to relieve the monitoring and housekeeping problems of the main host computer and to assume the burden of controlling a peripheral terminal unit and to monitor control of data transfer operations which occur between the peripheral terminal unit and the main host computer system.

A particular embodiment of such an I/O subsystem has been developed which uses peripheral controllers known as "data link processors" whereby initiating commands from the main host computer are forwarded to a peripheral-controller which manages the data transfer operations with one or more peripheral units. In these systems the main host computer also provides a "data link word" which identifies each task that has been initiated for the peripheral-controller. After the completion of a task, the peripheral-controller will notify the main host system with a result/descriptor word as to the completion, incompletion or problem involved in the particular task.

These types of peripheral-controllers have been described in a number of patents issued to the assignee of the present disclosure and these patents are included herein by reference as follows:

U.S. Patent 4,106,092 issued August 8, 1978, entitled "Interface System Providing Interfaces to Central Processing Unit and Modular Processor-Controllers for an Input-Output Subsystem", inventor D.A. Millers, II.

U.S. Patent 4,074,352 issued February 14, 1978, entitled "Modular Block Unit for Input-Output Subsystem", inventors D.J. Cook and D.A. Millers, II.

U.S. Patent 4,162,520 issued July 24, 1979, entitled "Intelligent Input-Output Interface Control Unit for Input-Output Subsystem", inventors D.J. Cook and D.A. Millers, II.

U.S. Patent 4,189,769 issued February 19, 1980, entitled "Input-Output Subsystem for digital Data Processing System", inventors D.J. Cook and D.A. Millers, II.

U.S. Patent 4,280,193 issued July 21, 1981, entitled "Data Link Processor for Magnetic Tape Data Transfer System", inventors K.W. Baun and J.G. Saunders.

U.S. Patent 4,313,162 issued January 26, 1982, entitled "I/O Subsystem Using Data Link Processors", inventors K.W. Baun and D.A. Millers, II.

U.S. Patent 4,322,792 issued March 30, 1982, entitled "Common Front-End Control for a Peripheral Controller Connected to a Computer", inventor K.W. Baun.

US Patent 4,293,928 discloses a peripheral dependent circuit for providing the specific functions required for data transfers between a peripheral terminal unit and a peripheral controller made up of a common control circuit card and a peripheral dependent circuit board. The peripheral dependent circuit board provides logic means for executing micro-code word operators received from the common control circuit card and provides multiplexor means for selecting a source of data that is to be transmitted in a RAM buffer memory. The peripheral dependent board also provides address logic means for formulating addresses to be used for the reading and writing of data out of and into the RAM buffer memory.

The present invention relates to a network wherein data is transferred between a main host computer and a magnetic tape peripheral unit via a peripheral-controller, wherein said peripheral-controller is initiated by commands from said host computer to execute data transfer operations and said peripheral-controller includes a common control circuit unit for sequencing microcode instructions and a peripheral dependent circuit unit for managing said tape peripheral unit, said peripheral dependent circuit unit having its own internal basic clock unit, a system for regulating data transfer operations from a magnetic tape peripheral unit to said peripheral-controller, said regulating system comprising buffer memory means in said peripheral-controller for temporarily storing blocks of data being transferred, said buffer memory means having channels of connection to said tape peripheral unit and said host computer; status means in said peripheral dependent circuit unit for providing information data for indicating the number of blocks of data residing in said buffer memory means; signal output means connected to said status means and functioning to provide status signals to said common control circuit unit; a tape control unit connecting a plurality of magnetic tape peripheral units to said peripheral dependent circuit unit and wherein said tape control unit provides synchronizing signals to said peripheral dependent circuit unit for the transfer of data to said buffer memory means; and latching logic means in said peripheral dependent circuit unit for receiving data from said tape control unit for subsequent transfer to said buffer memory means.

The invention is characterised in that said peripheral dependent circuit unit includes flag logic circuitry connected to receive clock signals from synchronization logic means regulated by clock signals from said tape control unit for periodically enabling said latching logic means to transfer data received, by said latching logic means, to said memory buffer means, said flag logic circuitry functioning to develop information signals for said latching logic means so as to permit data transfer to latching registers in said latching logic means when they are cleared of previous data inputs.

BRIEF DESCRIPTION OF THE DRAWINGS

FIG. 1 is an overall system drawing of the elements involved in data transfer operations between host computer and magnetic tape peripheral terminals.

FIG. 2 is a block diagram of the common control circuit of the peripheral-controller, also called the common front end.

FIG. 3 is a block diagram of the first circuit card of the peripheral dependent circuit of the peripheral-controller.

FIG. 4 is a block diagram of the second circuit card of the peripheral dependent circuit of the peripheral-controller.

FIG. 5A is a circuit drawing of the circuit for synchronizing data transfer from the tape control unit to the peripheral-controller.

FIG. 5B is a logic circuit used for control of automatic Read operations for transferring data from magnetic tape units to the peripheral-controller.

FIG. 5C is a chart illustrating operation of the automatic Read logic circuit.

FIG. 6 is a circuit diagram of the latching logic for the automatic Read circuit.

FIG. 7 is a diagram illustrating operation of the latch enable function of FIG. 5A.

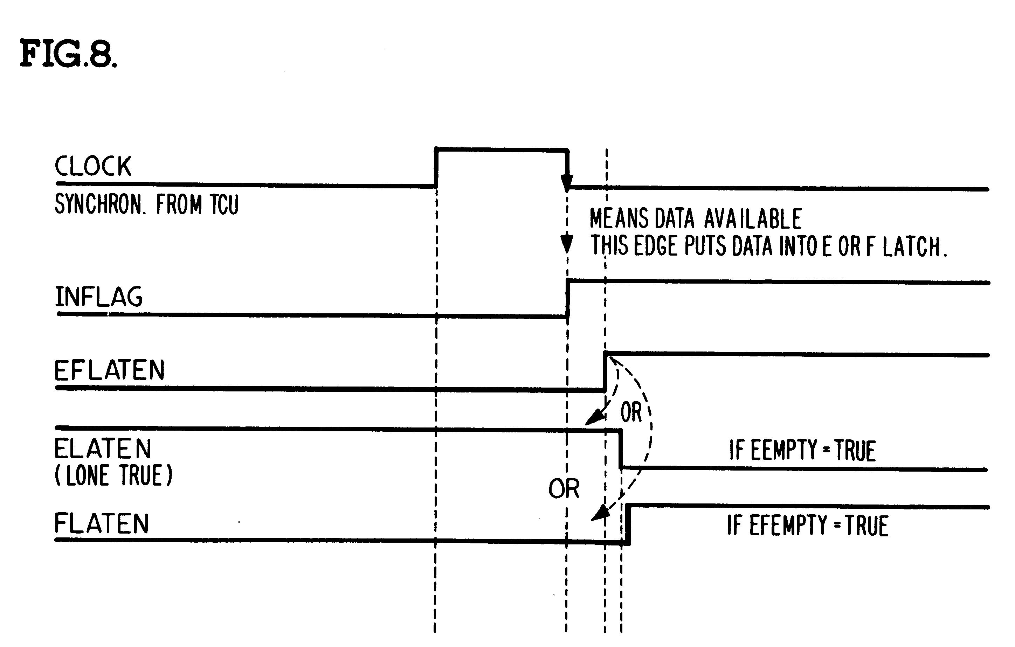

FIG. 8 is a timing diagram showing use of the automatic Read and latching circuitry.

General System Operation

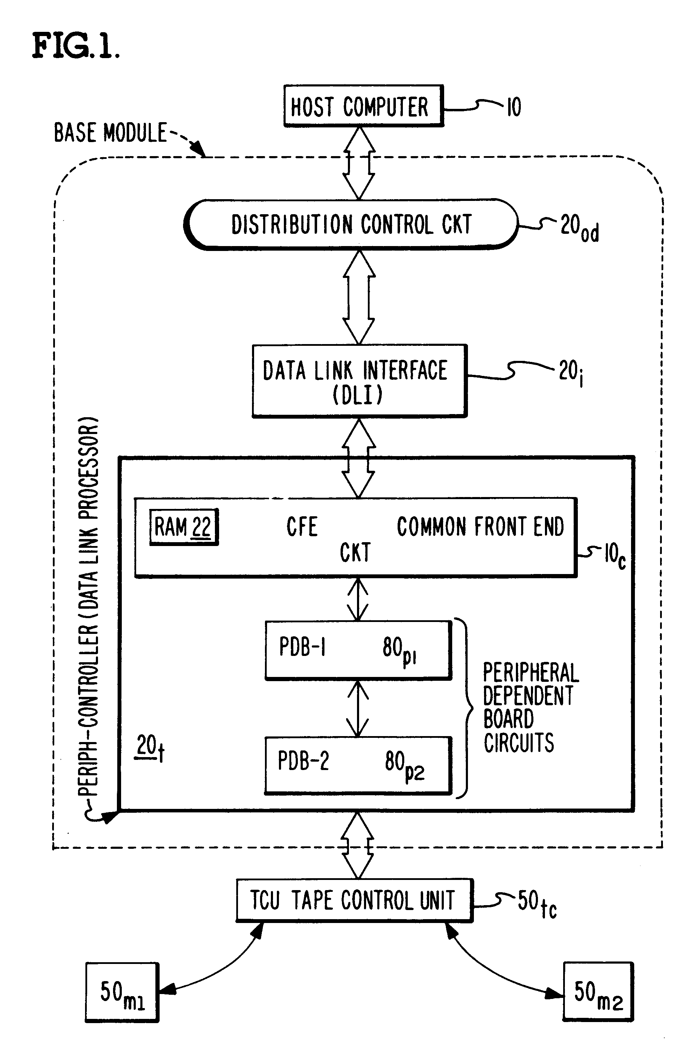

To initiate an operation, the host system 10, FIG. 1, sends the peripheral-controller (data link processor $20_t$) an I/O descriptor and also descriptor link words. The term "DLP" will be used to represent the Data Link Processor (peripheral-controller $20_t$). The I/O descriptor specifies the operation to be performed. The descriptor link contains path selection information and identifies the task to be performed, so that when a report is later sent back to the main host system 10, the main host system will be able to recognize what task was involved. After receipt of the I/O descriptor link, the data link processor (DLP) makes a transition to one of the following message level interface states.

(a) Result Descriptor: This state transition indicates that the data link processor $20_t$ is returning a result descriptor immediately without disconnection from the host computer 10. For example, this transition is used when the DLP detects an error in the I/O descriptor.

(b) DISCONNECT: This state transition indicates that the peripheral-controller $20_t$ which is designated as the Magnetic Tape-Data Link Processor (MT-DLP) cannot accept any more operations at this time and that the I/O descriptor and the descriptor link were received without errors. This state also indicates that data transfers or result descriptor transfers can occur.

(c) IDLE: This state transition indicates that the DLP $20_t$ can accept another legal I/O operation immediately and that the I/O descriptor and the descriptor link were received without errors.

When the operation is completed, the DLP $20_t$ returns a result descriptor indicating the status of the operation in the main host system. If the DLP detects a parity error on the I/O descriptor or the descriptor link, or if the DLP cannot recognize the I/O descriptor it received, then the DLP cannot proceed with execution of the operation. In this case, the DLP returns a one-word result descriptor to the host. In all other cases the DLP returns a two-word result descriptor.

The data link processor $20_t$ is a multiple-descriptor data link processor capable of queuing one I/O descriptor for each magnetic tape unit to which it is connected. There are certain descriptors (Test/Cancel; Test/Discontinue; and Test/ID) which are not queued, but which can be accepted at any time by the DLP. Test/Cancel and Test/Discontinue OPs are issued against a single magnetic tape unit in a queue dedicated to that peripheral unit, and require that an I/O descriptor for that particular magnetic tape unit already be present within the DLP. If an I/O descriptor is received and violates this rule, the DLP immediately returns a result descriptor to the host. This result descriptor indicates "descriptor error" and "incorrect state".

As previously discussed in the referenced patents, the MT-DLP utilizes the following status states (STC) transitions when "disconnected" from the host:

STC = 3 to STC = 1      IDLE to DISCONNECT
indicates that the DLP is attempting to process a queued OP.

STC = 1 to STC = 3      DISCONNECT to IDLE
indicates that the DLP is prepared to accept a new I/O descriptor.
STC = 3 to STC = 5     IDLE to SEND DESCRIPTOR LINK
indicates that the DLP is executing an OP, and that the DLP requires access to the host computer.
STC = 1 to STC = 5     DISCONNECT to SEND DESCRIPTOR LINK indicates that the DLP is executing an OP, and that the DLP requires access to the host computer.

The DLP status states can be represented in a shorthand notation such as STC = n.

Upon completion of an I/O operation, the data link processor forms and sends the result descriptor to the host system. This descriptor contains information sent by the tape control unit $50_{tc}$ to the DLP in the result status word, and also information generated within the DLP. The result descriptor describes the results of the attempt to execute the operation desired.

## DESCRIPTOR MANAGEMENT

All communications between the DLP $20_t$ and the host system 10 are controlled by standard DLP status states as described in the previously referenced patents. These status states enable information to be transferred in an orderly manner. When a host computer 10 connects to the DLP $20_t$, the DLP can be in one of two distinct states: (a) ready to receive a new descriptor, or (b) busy.

When in STC = 3 (IDLE), the DLP can accept a new I/O descriptor. When in STC = 1 (DISCONNECT) or in STC = 5 (SEND DESCRIPTOR LINK), then the DLP is busy performing a previously transferred operation.

When the DLP receives an I/O descriptor and descriptor link that does not require immediate attention, the DLP stores the descriptor in its descriptor queue. The DLP is then able to receive another I/O descriptor from the host system.

When the host system 10 "Disconnects" from the DLP $20_t$ after issuing one or more queued I/O descriptors, then the DLP initiates a search of its descriptor queue. This search continues until the DLP finds an I/O descriptor that needs DLP attention, or until the host "reconnects" to send additional I/O descriptors. If the DLP finds an I/O descriptor that requires attention, and if the descriptor specifies neither a Test/Wait for Unit Available OP, nor a Test/Wait for Unit Not Available OP, then the DLP verifies that the host is still "disconnected". If these conditions are met, the DLP goes to STC = 1 (DISCONNECT) and initiates execution of the descriptor. Once the DLP goes to STC = 1, then no further I/O descriptors are accepted from the host until the initiated operation has been completed and a result descriptor has been returned to the host.

The DLP searches its descriptor queue on a rotational basis. The order for search is not disturbed by the receipt of one or more new I/O descriptors, nor by the execution of operations. This means that all queued entries are taken in turn regardless of DLP activity and all units have equal priority.

When cleared, the DLP halts all operations in progress with the peripherals and invalidates all the queued I/O descriptors, and returns to Status STC = 3 (IDLE).

## DLP-DATA BUFFERS AND DATA TRANSMISSION

The data buffer 22 (FIG. 1) of the DLP provides storage for six blocks of data which are used in a "cyclic" manner. Each of the six blocks holds a maximum of 512 bytes of data. Data is transferred to or transferred from the host system one block at a time, via the buffer 22, followed by a longitudinal parity word (LPW). Data is always transferred in full blocks (512 bytes) except for the final block of data for a particular operation. This last block can be less than the 512 bytes, as may be required by the particular operation.

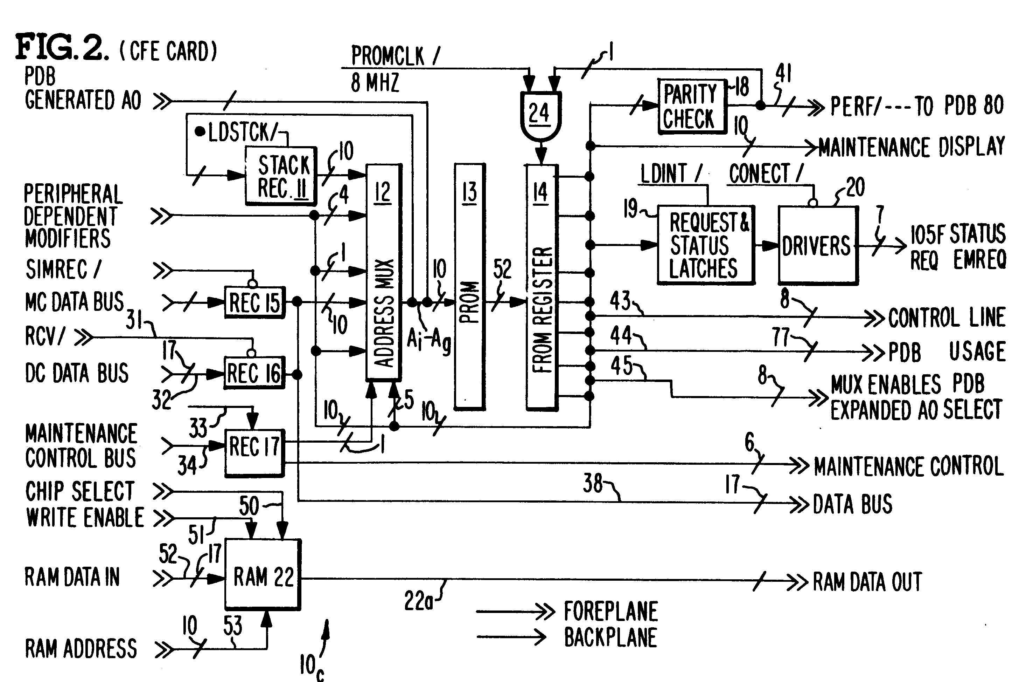

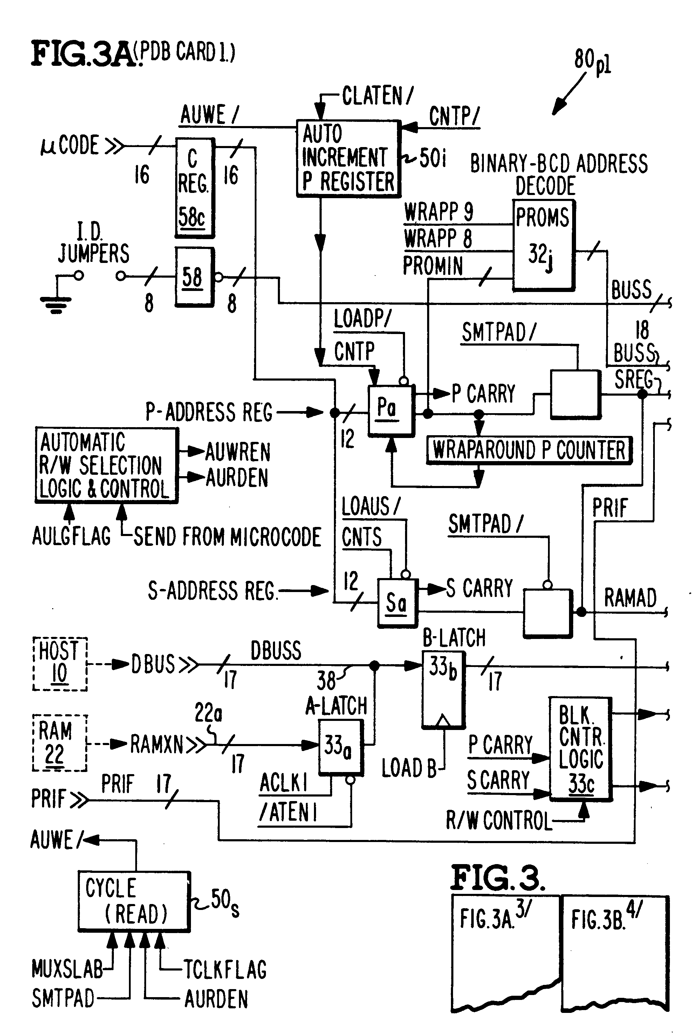

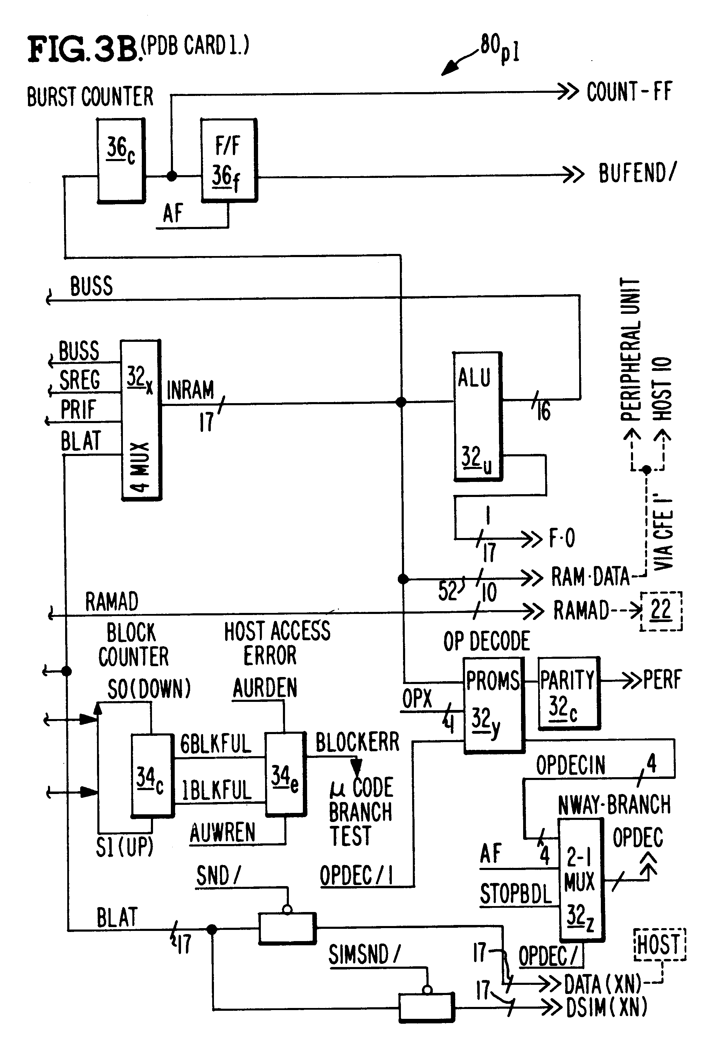

As seen in FIG. 3, logic circuitry (to be described hereinafter) is used to feed information to a block counter $34_c$ which will register the number of blocks of data residing in buffer 22 at any given moment. When certain conditions occur, such as a full buffer, or empty buffer, or "n" number of blocks, the counter $34_c$ can set to trigger a flip-flop $34_e$ which will signal the common control circuit unit $10_c$ (FIG. 2) to start routines necessary to either transfer data to the host 10 (after reconnecting to the host) or to get data from the host 10 to transfer to the buffer 22 (seen in FIG. 1, and FIG. 2); or else the unit $10_c$ can arrange to connect the DLP $20_t$ to the peripheral (as tape control unit $50_{tc}$) for receipt of data or for transmission of data.

During a Write operation, the block counter $34_c$ (FIG. 3) counts the number of blocks of data received from the host system 10. The data link processor "disconnects" from the host system once the DLP has received six buffers; or it will disconnect upon receipt of the "Terminate" command from the host system (a Terminate indicates the "end" of the Write data for that entire I/O operation). After disconnecting from the host, the data link processor connects to the peripheral tape control unit (TCU $50_{tc}$). Once proper connection is established between the data link processor and the tape subsystem, the data link processor activates logic which allows the tape control unit $50_{tc}$ a direct access to the DLP RAM buffer 22 for use in data transfers.

After the data link processor has transmitted one block of data to the tape control unit, the data link processor attempts to "reconnect" to the host system by means of a "poll request" (as long as the host 10 has not "terminated" the operation). Once this reconnection is established, the host transfers additional data to the data link processor. This transfer continues until either the six blocks of RAM buffer memory 22 are again full (a buffer which is in the process of being transferred to the tape control unit is considered full during this procedure), or until the host 10 sends a "Terminate" command. Data transfer operations between the data link processor $20_t$ and the tape control unit $50_{tc}$ continue simultaneously with the host data transfers occurring between host 10 and DLP $20_t$ - (via the buffer 22).

If the data link processor has not successfully reconnected to the host before the DLP has transmitted, for example, three blocks of data to the tape control unit $50_{tc}$, the data link processor sets "emergency request" on the data link interface $20_i$, FIG. 1. If the "emergency request" is not successfully serviced before the DLP has only one block of data remaining for transmission to the tape control unit, the data link processor sets a "Block Error" condition by signal from flip-flop $34_e$ to circuit $10_c$. This is reported to the host system as a "host access error" in the result descriptor.

The last block of data for any given I/O operation is transferred to the tape control unit $50_{tc}$ directly under micro-code control. During a "Read" operation, the data link processor first attempts to connect to the tape control unit $50_{tc}$. Once a successful connection is accomplished, the data link processor initiates logic to begin accepting data from the tape subsystem. Once the data link processor has received two blocks of data (or once the DLP receives all the data from the operation if the total length is less than two blocks), the data link processor attempts to connect to the host using a "poll request". The data link processor continues to accept tape data while at the same time affecting this host connection.

If the host does not respond to the "poll request" before four blocks of data are present in the DLP RAM buffer 22, the data link processor sets "emergency request" on the data link interface $20_i$. If no connection to the host system is effectuated before all of the six RAM buffers are filled, then the data link processor sets "host access error" in the result descriptor.

Once the host system answers a "poll request", the data link processor $20_t$ starts to send data to the host system 10 (which data came from a peripheral magnetic tape unit) while at the same time continuing to receive data from the tape control unit $50_{tc}$. After the host 10, FIG. 1, has received one block of data, the data link processor checks whether or not two full blocks of data remain to be transferred to the host. If this is so, the DLP uses a "break enable". If a "break enable" request is granted, then transmission of the next data buffer to the host continues to occur. If there are less than two full blocks of data in the RAM buffer 22 (or if the "break enable" is refused), the data link processor disconnects from the host and waits for two full blocks of data to be present. If a "break enable" is refused, the data link processor initiates another "poll request" immediately after disconnection.

When the data link processor has completed data transfer, the tape control unit $50_{tc}$ enters the result phase and sends two words of result status to the data link processor $20_t$. The DLP then incorporates this information, plus any internal result flags, into the result descriptor which the DLP then sends to the host.

## DESCRIPTION OF PREFERRED EMBODIMENT

Referring to FIG. 1, the overall system diagram is shown whereby a host computer 10 is connected through an I/O subsystem to a peripheral unit, here, for illustrative purposes, shown as a tape control unit $50_{tc}$. This tape control unit (TCU) is used to manage connection to a plurality of Magnetic Tape Unit (MTU) peripherals. As per previous descriptions in the above cited patents which were included by reference, the I/O subsystem may consist of a base module which supports one or more various types of peripheral-controllers, in addition to other connection and distribution circuitry such as the distribution control circuit $20_{od}$ and the data link interface $20_i$. The peripheral-controller $20_t$ is shown in modular form as being composed of a common front end circuit $10_c$ and a peripheral dependent circuit shown, in this case, as being composed of two peripheral dependent boards designated $80_{p1}$ and $80_{p2}$.

In this network situation, it is often desired that data from the main host computer be transferred on to a peripheral unit, such as a magnetic tape unit, for recording on tape. This would be done via a peripheral tape control unit TCU such as $50_{tc}$. Likewise, at times it is desired that data from the magnetic tape unit be passed through the tape control unit to be read out by the host computer. Thus, data is transferred in a bidirectional sense, that is, in two directions at various times in the activities of the network.

The key monitoring and control unit is the data link processor $20_t$ which when initiated by specific commands of the host computer will arrange for the transfer of the desired data in the desired direction.

The RAM buffer 22 (of FIGS. 1, 2) is used for temporary storage of data being transferred between peripherals and the main host computer. In the preferred embodiment this RAM buffer has the capability of storing at least six "blocks" of data, each block of which consists of 256 words.

The Magnetic Tape Data Link Processor (MT-DLP) consists of three standard 96-chip multi-layered printed circuit cards that plug into adjacent slots in the backplane of the base module (FIG. 1). The base module for this system has been previously described in U.S. 4,322,792 and the previously referenced patents.

The common front end card $10_c$ (FIGS. 1, 2) contains:

(a) The master control logic;

(b) 1K X 17-bit RAM words;

(c) 1K X 49-bit microcode PROM words which sequence and control the operation of the DLP;

(d) The interface receivers from the distribution card $20_{od}$ and from a maintenance card in the base module.

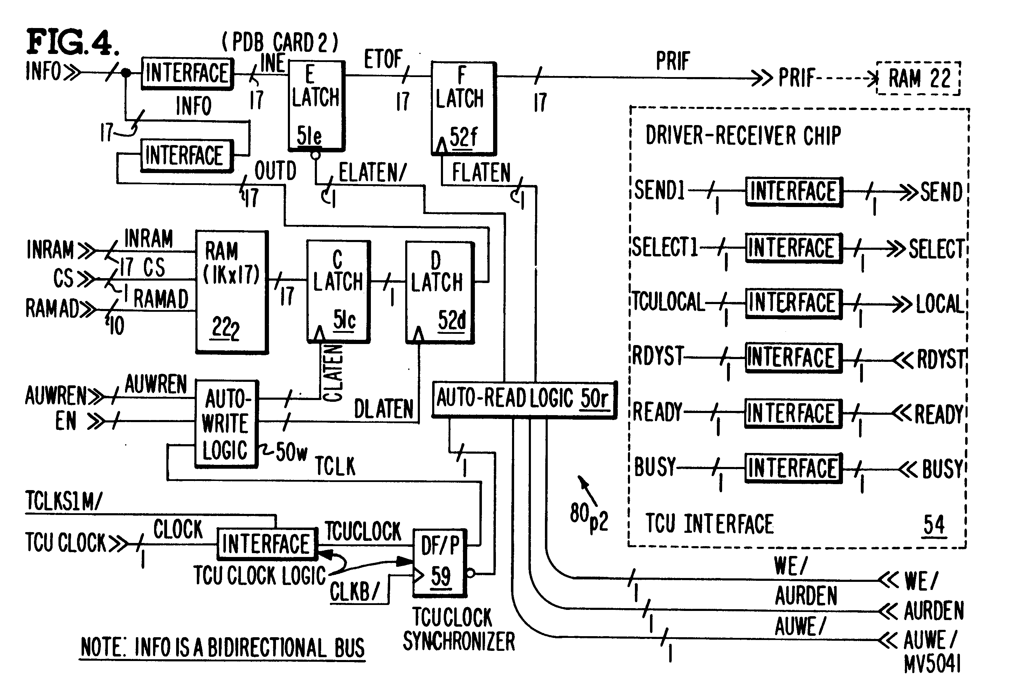

In addition to the common front end card $10_c$ there are two PDBs or peripheral dependent boards. These are designated PDB/1 and PDB/2 and are shown on FIGS. 3 and 4. These PDBs provide control signals and the interface to the magnetic tape subsystem.

The PDB/1 card contains:

(a) The System and Peripheral RAM Address Registers;

(b) The Binary-BCD Address Decode PROMs;

(c) Op Decode PROMs;

(d) N-Way Microcode Branch Logic;

(e) Burst Counter;

(f) Block Counter;

(g) Host Access Error Logic;

(h) Arithmetic Logic Unit (ALU).

The second peripheral dependent board card designated PDB/2 contains the following:

(a) The Auto Read Logic;

(b) Auto-Write Logic;

(c) Input (Read) and Output (Write) Latches;

(d) A 1K X 17-bit RAM buffer extension of the Common Front End RAM 22;

(e) Clock Logic for the Tape Control Unit $50_{tc}$;

(f) Interface Logic for the Tape Control Unit $50_{tc}$.

As discussed in the previously referenced patents, each card in the peripheral-controller (Data Link Processor) has "foreplane" connectors through which frontplane cables can interconnect these cards. The cards are slide-in cards which connect at the backplane connectors into the base module. The top two foreplane connectors of all three cards of the DLP are interconnected by means of three-connector, 50-pin foreplane jumper cables. The common front end is connected to the first board, PDB/1, via connector and cable and the board PDB/1 is connected to the second board, PDB/2, via another connector and cable. This is done by means of two-connector, 50-pin foreplane jumper cables. From the connector on the second board PDB/2, there is a 50-conductor cable which is connected to an interface card which plugs into an interface panel board. Connections to the tape subsystem TCU $50_{tc}$ is made from this interface panel board.

## COMMON FRONT END CARD (CFE 10c)

In FIG. 2 there is seen a basic block diagram of the common front end card which has previously been described in U.S. Patent 4,322,792 entitled "Common Front Control for a Peripheral Controller Connected to a Computer", inventor Kenneth W. Baun. The most significant item of the common front end card designated as $10_c$ in FIG. 2 is the PROM 13 which is a 1K X 52-bit word memory. Only 49 (including odd parity bits) of the 52 bits are used. The last three bits are not used or checked for parity.

PROM 13 consists of 13 PROM chips of 1K X 4-bit chips which are connected in parallel to form the 1K X 52-bit PROM. The contents of these PROMs 13 are called the microcode which controls all of the DLP functions. The microcode address lines, designated A0-A9, are wired in parallel to all 13 chips. The eight megahertz clock (PROMCLK/) latches the next 52-bit microcode word output from the PROM 13 into the microcode register 14.

The common front end card $10_c$ contains logic which generates the address for the microcode PROMs. Also, certain component terms in this logic are further generated on the peripheral dependent boards. The CFE $10_c$ has a stack register 11 composed of three binary counter chips. This register contains the value of the current PROM address or the subroutine return address for a stacked branch operation.

Seventeen 1K x 1-bit RAM chips are connected in parallel to make up the random access buffer memory 22 on the common front end card $10_c$. This RAM 22 is made of 1K X 17-bits. The Write Enable, the Chip Select, and the 10 RAM address lines are generated on the first PDB card $80_{p1}$, FIG. 1, and these address lines are routed in parallel to all of the RAM chips on the CFE $10_c$.

An additional 1K X 17-bit RAM buffer memory $22_2$ is provided on the PDB/2 card $80_{p2}$, FIG. 1. Thus, the RAM buffer memory is 2K words deep. The same Write Enable, Chip Select and RAM address lines that feed the RAM 22 also feed the RAM $22_2$ on the second board PDB/2. A "low" signal chip select is used to select the RAM 22.

The "high" chip select signal selects the extended buffer RAM $22_2$ on PDB/2. All the data inputs and data outputs to the RAM buffer memories are sourced, sunk and controlled by the peripheral dependent boards PDB/1 and PDB/2.

The common front end $10_c$ also contains much of the logic for the hostward DLP interfaces. The "interface" to the distribution card $20_{od}$ and a path selection module is called the Data Link Interface (DLI) shown as $20_i$ on FIG. 1. The common front end $10_c$ contains the drivers and receivers for the control line on the DLI. The common front end card also contains the receivers for the bi-directional DLI data bus (DATAxx/O). The drivers and the directional controls for this particular bus are located on the first PDB card PDB/1.

The common front end card contains the receivers and control logic which enables connection to a maintenance card in the base module, and which governs test diagnostics for the data link processor. The CFE $10_c$ also contains the receivers for the 17-bit bi-directional data simulation bus (DSIMxx/O). This bus provides both data simulation and microcode PROM address override when used in the "maintenance mode". The drivers for this bus are located on the PDB/1 card. The CFE $10_c$ also contain some of the maintenance display logic used in DLP diagnostic routines.

The maintenance interface line (SWH.1/.0) is used to override the microcode PROM address. When the DLP is connected to the maintenance card, and when this line is "low", the DSIMxx/0 lines provide the microcode addresses. This permits the verification of the contents of the microcode, and also allows special microcode words to be used to govern DLP action during diagnostics.

## PERIPHERAL DEPENDENT CIRCUITRY

The primary function of the peripheral dependent boards PDB/1, PDB/2 is to provide the interface to the peripheral tape subsystem which is controlled by tape control unit $50_{tc}$, FIG. 1. FIG. 3 is a functional block diagram of the first PDB card designated PDB/1. FIG. 3 shows the first PDB card containing addressing lines, data path lines and data path control for the DLP RAM 22 (FIG. 2) and $22_2$ (FIG. 4), the arithmetic logic unit $32_u$ (ALU) for the DLP, in addition to longitudinal and vertical parity generation and checking logic, microcode branching and control decode logic, peripheral data block counting and a binary-BCD converter.

Two twelve-bit address registers $P_a$ and $S_a$ are used to store RAM addresses. The system address register $(S_a)$ is used when the MT-DLP is communicating with the host 10, and the peripheral address register $(P_a)$ is used when the data link processor is communicating with the tape control unit, TCU $50_{tc}$. Ten-bits are needed to address the RAM (22 or $22_2$). Bit number 9 is the RAM chip select. When this bit is low, the RAM on the common front end card $10_c$ is addressed (RAM 22). When the chip select line is "high", the RAM $22_2$ on the second PDB card PDB/2 is addressed. Bit 10 of the address register provides function control. Both of these registers are addressed by the common front end microcode through the constant register designated C-register.

The arithmetic logic unit $32_u$ (ALU) is comprised of four 4-bit bi-polar-bit-slice microprocessors cascaded to form one 16-bit processor. The ALU contains sixteen 16-bit internal registers which can be loaded by the CFE microcode (from $10_c$) for both arithmetic and Boolean operations. Nine bits of microcode are used to control the ALU 32.

The ALU 32 receives input data from a 4 X 1 multiplexor $32_x$ (MUX). The same multiplexor $32_x$ also forms the data input 52 to the DLP RAM buffer 22 on the line labelled RAM-DATA of FIG. 3.

The data path on the PDB/1 card of FIG. 3 consists of two latches, $33_a$ and $33_b$. The A-latch $33_a$ of FIG. 3 receives the RAM buffer 22 output data. The B-latch $33_b$ receives data from the A-latch, from the common front end DLI receivers or else from the common front end DSIM bus receivers. B-latch receives these inputs on line 38 of FIG. 3. The B-latch outputs are fed to the 4 X 1 multiplexor $32_x$ and then to the ALU $32_u$ or else to the RAM buffer 22, or to the DLI data bus (DATAxx/0), or to the MI data simulation bus (DSIMxx/0). The drivers for these last two interfaces are located on the first PDB card designated PDB/1.

The block counter 34 of FIG. 3 keeps track of the number of data blocks available for transfer or for acceptance with the host system and with the tape subsystem, $50_{tc}$.

## BURST MODE:

The MT-DLP has capabilities of utilizing a burst mode data transfer mode wherein data can be transferred to the host system at the maximum DLI rate of 64 megabits per second (depending upon the speed capability of the host system). When in the burst mode, the 8-bit burst counter $36_c$ maintains a count of the number of words remaining to be transferred between the host and the data link processor during the burst transfer cycle.

A converter $32_p$ designated Binary-to-BCD converter which uses binary address decode logic, converts binary data from the host system into binary-coded-decimal (BCD) data for use of the peripheral tape subsystem.

FIG. 4 shows a block diagram of the second peripheral dependent board designated PDB/2. This card contains an extension RAM $22_2$ of the RAM memory 22 (which is located on the CFE card $10_c$). The RAM memory extension on the second PDB card is designated as $22_2$ and contains a 1K X 17-bit memory area. Particularly significant on the card PDB/2 is the logic designated as the Auto Read Logic $50_r$ and the Auto Write Logic $50_w$. In addition, the second peripheral dependent board card includes input latches $51_e$ and $51_c$ and output latches $52_f$ and $52_d$. A clock signal from a peripheral (TCU clock) feeds to a peripheral synchronizing clock circuit 59 for the peripheral subsystem (PRIF) and the interface 54 (driver-receiver) which connects to the tape control unit TCU $50_{tc}$. This interface 54 contains drivers and receivers for the various control signal lines between the PDB/2 card and the tape control unit.

The extended RAM memory $22_2$ on PDB/2 (FIG. 4) is a 1K X 17-bit memory which uses the same address lines and the same "write enable" as the common front end RAM buffer memory 22. A "high" chip select signal selects the extended RAM $22_2$, as previously discussed.

Unique to the magnetic tape data link processor is the logic known as the auto-write and auto-read logic ($50_w$, $50_r$). After being initialized and enabled, this logic is capable of transferring data to or from the tape control unit or independently from any further microcode control from the CFE $10_c$. Thus, the MT-Data Link Processor can "simultaneously" transfer data on both the Data Link Interface $20_i$ with the host 10 and at the same time, transfer data on the peripheral interface with the tape control unit.

During a "Write" operation, the block counter $34_c$ (FIG. 3) counts the number of blocks of data received from the host system 10. The data link processor disconnects from the host system once the DLP has received six buffers; or upon receipt of the "Terminate" command from the host system (a "terminate" indicates the end of the Write data for that entire I/O operation). After disconnecting from the host, the data link processor $20_t$, FIG. 1, connects to the peripheral tape control unit $50_{tc}$. Once proper connection is established between the data link processor and the tape subsystem, the data link processor activates the Auto-Write logic. This allows the tape control unit a direct access to the DLP RAM buffer 22 or $22_2$ for use in data transfers.

After the data link processor has transmitted one block (256 words) of data to the tape control unit, the data link processor attempts to "re-connect" to the host system by means of a "poll request". Once this re-connection is established, the host transfers additional data to the buffer 22 of the data link processor. This transfer continues until either the six blocks of RAM buffer memory are again full (a buffer which is in the process of being transferred to the tape control unit is considered full during this procedure), or until the host sends a "terminate" command. Data transfer between the data link processor and the tape control unit $50_{tc}$

continues simultaneously with the host data transfers.

If the MT-data link processor has not successfully reconnected to the host before the DLP has transmitted three blocks of data to the tape control unit, the data link processor sets "emergency request" on the data link interface $20_i$ (DLI). If the "emergency request" is not successfully serviced before the DLP has only one block of data remaining for transmission to the tape control unit, the data link processor sets a "Block Error" condition. This is reported to the host system as a "host access error" in the result descriptor.

The last remaining block of data for any given I/O operation is transferred to the tape control unit $50_{tc}$ directly under microcode control of the common front end $10_c$. Here the Auto-Write logic is not used for transfer of the last data block. During a "Read" operation, the MT-data link processor first attempts to connect to the tape control unit. Once a successful connection is accomplished, the data link processor initiates the "Auto-Read Logic" $50_r$ and begins accepting data from the tape subsystem. Once the data link processor has received two blocks of data (or once the DLP receives all the data from the operation if the total length is less than 2-blocks) the data link processor attempts to connect to the host using a "poll request". The data link processor continues to accept tape data while at the same time affecting this host connection.

If the host does not respond to the "poll request" before four blocks of data are present in the DLP RAM buffer 22, the data link processor sets "emergency request" on the data link interface (DLI). If no connection to the host system is effectuated before all of the six RAM buffers are filled, then the data link processor sets "host access error" in the result descriptor.

Once the host system answers a "poll request", the data link processor $20_t$ starts to send data to the host system while at the same time, continuing to receive data from the tape control unit $50_{tc}$ under control of the Auto-Read Logic $50_r$. After the host has received one block of data, the data link processor checks whether or not two full blocks of data remain to be transferred to the host. If this is so, the DLP uses a "break enable". If a break enable request is granted, then transmission of the next data buffer to the host continues to occur. If there are less than two full blocks of data in the RAM buffer 22 (or if the "break enable" is refused), the data link processor disconnects from the host and waits for two full blocks of data to be present. If a "break enable" is refused, the data link processor initiates a "poll request" immediately after disconnection.

In the normal situation when there are more than two blocks of data to be transferred to the host system, the DLP sets the "burst counter" $36_c$ to zero and sends blocks of data to the host in the burst mode. When there are less than two blocks of data remaining to complete the I/O operation, the DLP calculates the actual length of the remaining data by comparing the P-register and S-register. The data link processor determines whether the remaining number of bytes is "odd" or is "even". If odd, the final byte is the PAD byte (all zeros inserted by the DLP). The final two blocks, whether partial or full, are sent to the host using a demand mode on a word by word transfer basis.

When the data link processor has completed data transfer, the tape control unit enters a "Result Phase" and sends two words of result status to the data link processor. The DLP then incorporates this information, plus any internal result flags, into the result descriptor which the DLP $20_t$ then sends to the host 10.

Referring to FIG. 3, a block counter logic unit $33_c$ is used to receive input from two address registers designated as the peripheral address register, $P_a$, and the system address register, $S_a$. The peripheral address register, $P_a$, handles addresses required when data is retrieved from the peripheral tape unit or when data is being sent to the peripheral tape unit. The system address register, $S_a$, is used when data is being received from the host system into the buffer 22 when data is being sent to the host system from the buffer 22. These two address registers in FIG. 3 are seen to receive their address data via microcode signals from the common front end circuit $10_c$ of FIG. 1.

The address data outputs from $P_a$ and $S_a$ are fed to the RAM buffer 22 in order to address the desired location in the buffer memory. Further, the block counter logic unit $33_c$ receives one input designated "P Carry" from the peripheral address register and another input "S Carry" from the system address register, in addition to a Read/Write control signal from read-write flip-flop $33_f$. The flip-flop $33_f$ is controlled by microcode signals from the peripheral-controller common front end unit $10_c$. The block counter logic unit $33_c$ provides two output signals designated $S_1$ and $S_0$ which are fed to the block counter $34_c$ where the output signals $S_1$ and $S_0$ are combined at certain times on occurrence of rising clock signals in order to provide conditions which will make the block counter either "shift up" or "shift down" or "no shift".

The block counter $34_c$ will reflect the situation that when data is being taken out of the magnetic tape unit in order to be fed to RAM buffer 22 ("Read" operation), the block counter will shift up unless at the same time there is data being removed from buffer 22 for transfer to the main host computer system in which case the block counter

$34_c$ will shift down. Thus, the condition of the block counter's numerical status will indicate the "balance" between what data has gone out of and what data has come into the RAM buffer 22.

Referring to FIG. 3, if there is a "Write" operation, this determines that data is to be "written" into the magnetic tape unit. Then, as data is removed from the RAM buffer 22 over to the magnetic tape unit, the block counter $34_c$ will shift down but if more data is transferred from the main host computer into the RAM buffer 22, the block counter will be shifted up. Thus, again the placement of "ones" in various bit positions of $34_c$ provides a running balance of the data blocks taken out as against the data blocks taken in at any given period.

The condition known as the "host access error" causes the setting of a flip-flop $34_e$, FIG. 3. (This is also called a block counter error). Thus, on a Read operation a full RAM buffer (six blocks of data) will signal an error condition. Likewise, on a Write operation a single (one) remaining block of data will trigger an error condition.

During "Read" operations:

(a) As the P Carry increases (data being transferred from peripheral tape to buffer memory 22), the block counter $34_c$ will "shift up" indicating the buffer is being "loaded".

(b) As the S Carry increases (data from buffer memory being transferred to main host system), the block counter $34_c$ will "shift down" indicating the buffer memory is being "emptied".

During "Write" operations:

(c) As S Carry increases (data being loaded in buffer memory from main host system), the block counter $34_c$ will "shift up" to indicate the number of blocks of data in the buffer.

(d) As P Carry increases (data in buffer being unloaded for transfer to peripheral tape unit), the block counter $34_c$ will "shift down" and show how much data is left remaining in buffer 22.

During "Read" operations, when a "1" appears in the 6th bit position of block counter $34_c$, then a flip-flop circuit $34_e$ (FIG. 3) is "set" and provides a signal to the common front end circuit $10_c$ which will inform the main system of an "access-error" condition. This signifies that the buffer memory 22 was "overfilled" in that the main host system 10 did not accept data quickly enough.

During "Write" operations, when the buffer memory 22 has received six blocks of data from the host system, and the 1st bit position (1 BLKFUL) becomes "0", this indicates that the buffer memory has been completely unloaded (cleared) and then the flip-flop $34_e$ is "set" to signal the common front end circuit $10_c$ that more data is required from the host 10. This indicates the host did not supply data quickly enough to the RAM buffer 22.

Thus, the Data Link Processor $20_t$ provides a system for the control of data transfers which is sensitive to the condition of the data-in-transit residing in a RAM buffer memory and by which it is possible to monitor blocks of data being transferred between peripheral units and a main host computer when there are simultaneous flows of data being put into or taken out of the RAM buffer means.

## AUTOMATIC READ SYSTEM FOR MAGNETIC TAPE-PERIPHERAL CONTROLLER

Referring to FIG. 3, there is again seen a block diagram of the main elements of the peripheral dependent card PDB/1 which is used in the magnetic tape peripheral-controller.

In addition to individual word data transfer operations, the system operates to permit automatic transfers of data without need for repeated instruction routines. Thus, the microcode from common control circuit $10_c$ (FIGS. 1, 2) can set Read/Write Selection Logic $50_a$ (FIG. 3) for either Auto Read or Auto Write enabling signals (AURDEN, AUWREN).

For data transfers between the magnetic tape peripherals (via tape control unit $50_{tc}$) and buffer memory 22, the Auto Increment Register $50_i$ is used to increment the Peripheral Address Register, $P_a$.

The Cycle Steal unit $50_s$ (FIG. 3) is used to sense when the peripheral-controller $20_t$ is not connected to the Host 10 and is not otherwise busy, so that those available cycle times may be provided for Auto Read or Auto Write operations.

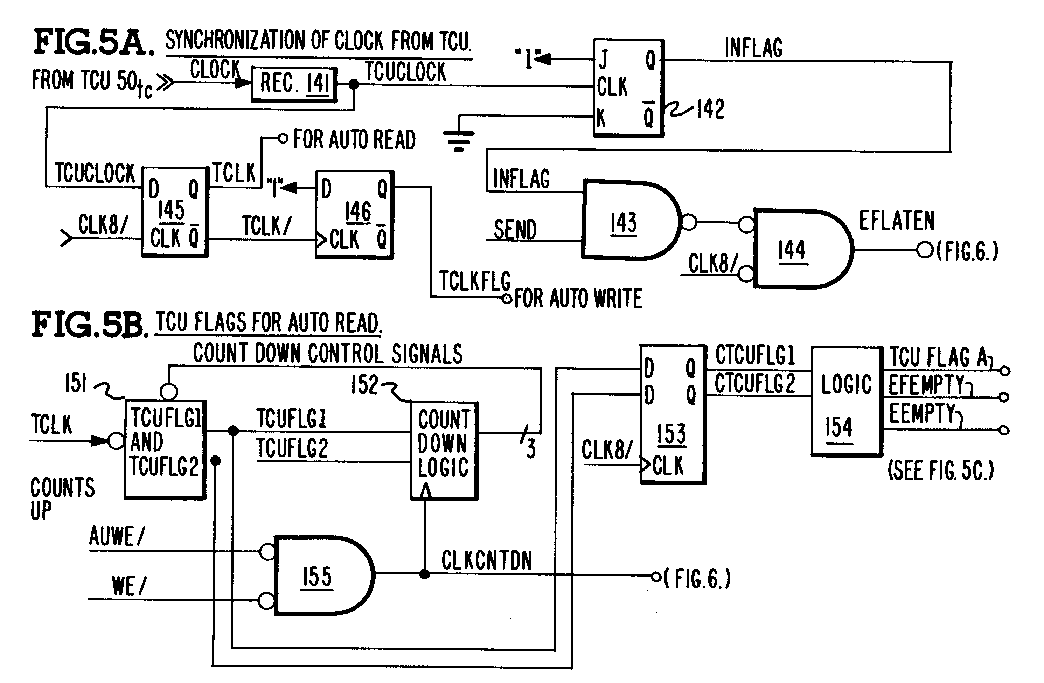

In FIGS. 3, 5A, the TCU clock synchronizer 59 receives signals from the tape control unit (TCU) clock shown as TCU clock input to synchronizer 59. The synchronizer 59 also receives an eight-megahertz clock signal designated CLK8/.

The TCU clock synchronizer 59 is used during "Read" operations whereby data from a selected magnetic tape unit is sent via the tape control unit TCU $50_{tc}$ over to the main host system 10 by means of the data link processor (peripheral-controller) $20_t$.

In FIG. 4 the automatic read logic $50_r$ receives the coordination and clocking signal from the clock synchronizer 59 in order to regulate the timing of data transfers from the magnetic tape over to the RAM buffer 22 of peripheral-controller $20_t$. This is done on an "automatic basis" which is regulated by the clock synchronizer 59.

The purpose of the clock synchronizer 59 is to regulate and clock the sequence of data which is read-out from the magnetic tape peripheral unit for transfer over to the RAM buffer 22 of the peripheral-controller $20_t$.

Thus, the clock signals (TCU) from the tape control unit $50_{tc}$ are combined with basic 8-megahertz clocking signals in order to regulate the transfer of data on an automatic basis from the magnetic tape peripheral unit to the buffer 22 of the peripheral-controller.

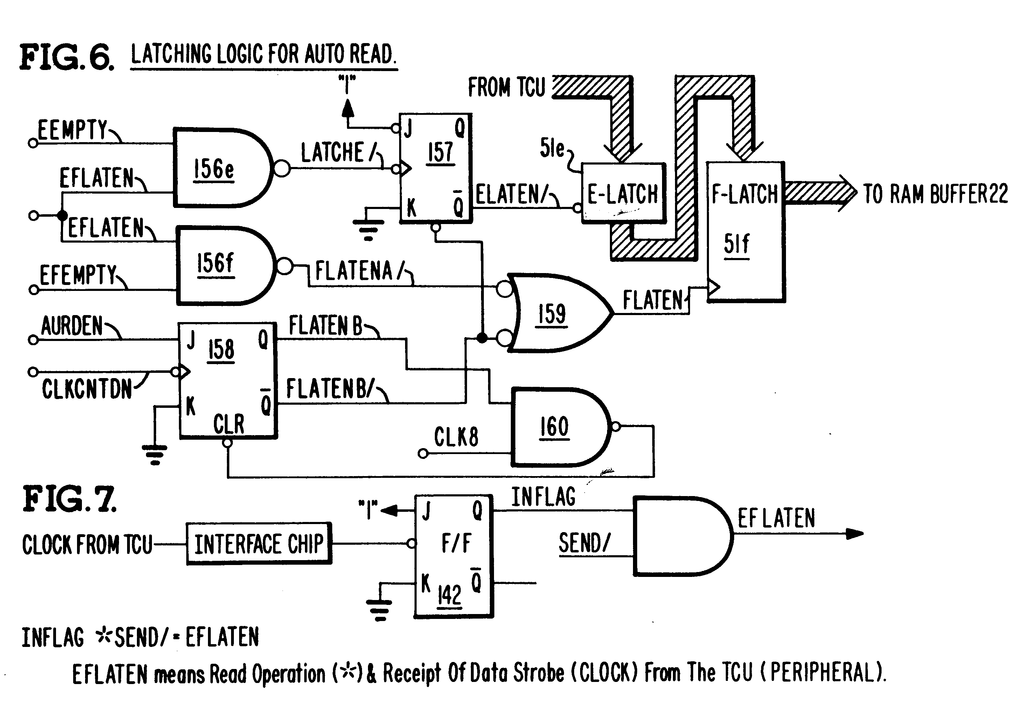

In FIG. 4 the bi-directional line INFO (at the top left of this drawing) connects to the peripheral tape control unit while the bus PRIF at the upper right-hand side of FIG. 4 connects to the 4-1 multiplexor $32_x$, FIG. 3, which feeds to the RAM buffer 22. This will also be seen in FIG. 6 where the F-latch $51_f$ is seen to have an output bus which provides output connection to the RAM buffer 22.

Referring to FIG. 5A, there is shown the clock synchronizer 59 in greater detail. As seen in FIG. 5A, the TCU clock signal is conveyed from the tape control unit TCU $50_{tc}$ and provides an input to receiver 141. The output of this receiver is fed to a JK flip-flop 142 and also to a D flip-flop 145. The Q output of JK 142 provides a signal INFLAG which is fed to a NAND gate 143 which has a second input designed SEND/. The SEND/ signal is provided from the common front end circuit $10_c$. The output of gate 143 is fed to gate 144 which has a second input CLK8/. The output of gate 144 provides the signal EFLATEN which is the latch enable signal for the latches shown in FIG. 6.

The output of receiver 141 in FIG. 5A is designated TCU clock and is fed to the D flip-flop 145 which has a second input CLK8/. The Q output of the D flip-flop 145 provides the TCLK signal for "Automatic Read". The $\overline{Q}$ output provides a TCLK/ signal which feeds to a D flip-flop 146 to provide the TCLKFLG signal which is used for "Automatic Write" operations.

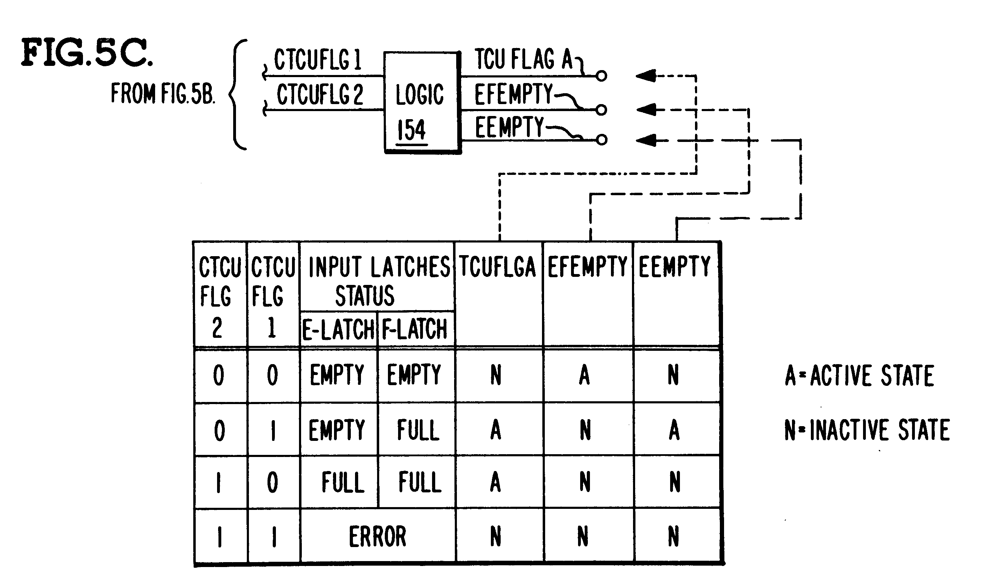

In FIG. 5B there is shown the use and development of flag signals from the tape control unit $50_{tc}$ which are used for Automatic Read operations. As seen in FIG. 5B, a signal TCLK provides input to a 2-bit counter 151 which is used to count up. This counting up is used to signify the number of clocks and hence the number of words which are being read out of the magnetic tape unit and the tape control unit. The output of the 2-bit counter 151 is fed to a count-down logic circuit 152 which provides a control signal output which feeds back to counter 151 in order to count-down. The count-down logic of 152 is used for other operations such as "Write" operations when it is necessary to count in reverse direction to quantify the number of words which are being "written" into a tape control unit rather than being taken out of it. The count-down logic 152 is provided with the output of a NAND gate 155 having inputs reflective of "Write Enable" and for automatic Write Enable, AUWE/, which derive from FIG. 3. The output of NAND gate 155 is the signal CLKCNTDN which is the clock count-down signal.

The two output lines of counter 151 are designated TCU flag 1 and flag. 2. These lines are conveyed over to D flip-flop 153 which also has an 8-megahertz clock input. The outputs of D flip-flop 153 are designated CTCU flag 1 and flag 2. These are signals which are delayed one clock time over the signals TCU flag 1 and flag 2. The logic unit 154 receives the two CTCU flag signals (flag 1 and flag 2) and provides three output lines, designated TCUFLG, EFEMPTY and EEMPTY.

These output signals of the logic unit 154 are tabularly shown in FIG. 5C as reflective of certain conditions that occur with respect to the word latches E and F ($51_e$, $51_f$) of FIGS. 4 and 6.

Referring to FIG. 6, there is shown the latching logic for Automatic Read operations in the magnetic tape peripheral-controller. Here in FIG. 6 it will be seen that the signal EFLATEN (E-latch, F-latch enable) are derived from the output of NAND gate 144 of FIG. 5A. This signal feeds to both NAND gates $156_e$ and $156_f$ of FIG. 6. The NAND gate $156_e$ has an input EEMPTY which is shown derived in FIG. 5B in logic unit 154, while the input signal to $156_f$ is EFEMPTY which is derived from logic unit 154 of FIG. 5B.

The output of $156_e$ (FIG. 6) is conveyed to JK flip-flop 157 where the $\overline{Q}$ output is used to regulate the E-latch $51_e$. The latch $51_e$ receives words from the TCU $50_{tc}$ as shown in FIG. 6. Thus, one word at a time is latched into the E-latch and then transferred to the F-latch $51_f$.

The output of NAND gate $156_f$ is fed to NAND gate 159. The other input to gate 159 comes from a JK flip-flop 158 in which JK 158 has inputs from the Automatic Read enable signal AURDEN and from the clock count-down signal. The Q output of flip-flop 158 is fed to a NAND gate 160 which feeds back a clear signal to the JK flip-flop 158.

It will be noted that NAND gate 159 provides the latch enable signal to the F-latch $51_f$ whereby the F-latch may then take a word and convey it to the RAM buffer 22 of the peripheral-controller. This RAM buffer 22, as previously noted, is located on the common front end card CFE $10_c$ (FIG. 2 and its extension on FIG. 4 as RAM $22_2$).

Thus, the combination effect of the latch enable signals to the E-latch and to the F-latch is to permit a word to be latched into the E-latch and then transferred and latched into the F-latch after which it can be transferred to a location in the buffer 22.

Thus, in Automatic Read operations the combination of clock signals from the tape control unit $50_{tc}$ and the 8-megahertz basic clock signals will combine to time and to enable the transfer of data from the magnetic tape unit to the RAM buffer 22 of the peripheral-controller.

Referring to FIG. 5C, there is seen a tabular scheme chart which indicates the relationships of the logic signals from logic unit 154, the input flag signals to the logic unit 154 and the status of the input latches for the E-latch $51_e$ and for the F-latch $51_f$.

As seen in FIG. 5C, when the E-latch and the F-latch are both "empty", then the output line EFEMPTY is active while the other two output lines of logic unit 154 are inactive.

When the E-latch is "empty" and the F-latch is "full, then the output logic line EFEMPTY is "inactive" while the other two lines (TCU flag A and EEMPTY) are both "active".

When both the E-latch and F-latch are full (that is to say, when each of them has a single word being held within it), then it will be seen that the TCUFLGA line is "active" while both the other two lines are "inactive".

If there should be an "error" because the latches are both full (and thus some data may have been lost in transmission), then all three output lines of the logic unit 154 will be "inactive" in order to indicate the error status.

As seen in FIG. 7 and in further clarification of FIG. 5A, the TCU clock is connected to the JK flip-flop 142 which provides the output signal INFLAG. This signal is ANDed with the SEND/ signal to provide the signal EFLATEN.

This signal (EFLATEN) means that the Read operation and the receipt of the data strobe (clock) from the tape control unit peripheral will put data into the E or F latch.

Thus, the peripheral-controller $20_t$ provides capability for an automatic Read system whereby a peripheral tape control unit will send synchronization clocking signals which are combined with the basic 8-megahertz clock signals of the system in order to regulate the movement of individual words from a magnetic tape unit over to an "E-latch" and thence to an "F-latch" for transfer to the RAM buffer 22 for temporary storage. The circuitry of FIG. 5B will be seen to provide sensitivity to the conditions of the E-latch and the F-latch so that data transferred can be regulated as long as one of the latches (E-latch and F-latch) is empty and capable of accepting data; and further the circuit of FIG. 5B will indicate when these latches are full which would lead to an error condition whereby data transfer might be lost because the latches were both filled up.

The peripheral-controller described herein permits data transfers from magnetic tape peripherals to temporary buffer memory storage in the controller in an orderly synchronized fashion regulated by the peripheral.

**Claims**

1. In a network wherein data is transferred between a main host computer (10) and a magnetic tape peripheral unit ($50_{m1}$,$50_{m2}$) via a peripheral-controller ($20_t$), wherein said peripheral-controller is initiated by commands from said host computer to execute data transfer operations and said peripheral-controller includes a common control circuit unit ($10_c$) for sequencing microcode instructions and a peripheral dependent circuit unit ($80_{p1}$,$80_{p2}$) for managing said tape peripheral unit, said peripheral dependent circuit unit having its own internal basic clock unit, a system for regulating data transfer operations from a magnetic tape peripheral unit to said peripheral-controller, said regulating system comprising buffer memory means (RAM 22) in said peripheral-controller for temporarily storing blocks of data being transferred, said buffer memory means having channels of connection to said tape peripheral unit and said host computer; status means ($34_t$) in said peripheral dependent circuit unit for providing information data for indicating the number of blocks of data residing in said buffer memory means; signal output means ($34_c$) connected to said status means and functioning to provide status signals to said common control circuit unit; a tape control unit ($50_{tc}$) connecting a plurality of magnetic tape peripheral units to said peripheral dependent circuit unit and wherein said tape control unit provides synchronizing signals to said peripheral dependent circuit unit for the transfer of data to said buffer memory means; and latching logic means (Fig. 6) in said peripheral dependent circuit unit for receiving data from said tape control unit for subsequent transfer to said buffer memory means, characterised in that said peripheral dependent circuit unit includes flag logic circuitry (Fig. 5B) connected to receive clock signals from synchronization logic means (Fig. 5A) regulated by clock signals from said tape control unit for periodically enabling said latching logic means to transfer data received, by said latching logic means, to said memory buffer means, said flag logic circuitry functioning to develop information signals for said latching logic means so as to permit data transfer to latching registers (51a,51c) in said latching logic means when they are cleared of previous data inputs.

2. A system according to Claim 1, wherein said latching logic means includes a first latch register (51e) for receiving data from said tape control unit and for transferring data to a second latch register (51f) connected to place data into said buffer memory means.

3. A system according to Claim 2, wherein said flag logic circuitry includes means to receive clock synchronizing signals (TCUCLOCK) from said synchronization logic means, and to receive the basic clock signal (CLK8/) from said internal basic clock unit; and counting means (151,152,153) for providing data signals which represent the current status of each of said first and second latch registers, and for providing said data signals to a flag logic unit (154); said flag logic unit operating to provide information signals to said latching logic means for indicating the current status of said first and second latch register as either being available for data (empty) or not available (full).

4. A system according to Claim 2 or Claim 3, wherein said latching logic means includes gating means (156e,156f) to receive status information signals from said flag logic circuitry in order to periodically enable said first and second latch registers for receipt of data from said tape control unit.

5. A system according to Claim 4, wherein said latching logic means includes means to receive read-enable control signals from said peripheral dependent circuit unit to indicate that a "Read" operation is now in progress so that data can be moved from the said tape control unit to said peripheral-controller.

6. A system according to Claim 5, wherein said synchronization logic means includes means (141) to receive synchronizing clock signals from said tape control unit; and means (145) to combine said synchronizing block signals with said basic clock to provide a clock signal (TCLK) for "Read" operations where data is transferred from said tape control unit to said peripheral-controller.

7. A system according to Claim 6, wherein said synchronization logic means includes:
   (a) means to provide a latch enable signal (EFLATEN) to said first and second latch registers, said means including:
   (a1) gating means (143,144) for developing said latch enable signal, said gating means being responsive to:
   (i) said basic clock;
   (ii) said clock signals from said tape control unit; and
   (iii) a control signal (SEND) from said common control circuit to signal the "read operation" condition.

**Revendications**

1. Dans un réseau dans lequel des données sont transférées entre un ordinateur central (10) et une unité périphérique à bande magnétique (50$_{m1}$, 50$_{m2}$) par l'intermédiaire d'un circuit de commande de périphérique (20$_t$), dans lequel ledit circuit de commande de périphérique est mis en action par des commandes issues dudit ordinateur central pour exécuter des opérations de transfert de données, et ledit circuit de commande de périphérique comporte une unité à circuit de commande commun (10$_c$) pour séquencer des instructions de microcode, et une unité à circuit dépendant périphérique (80$_{p1}$, 80$_{p2}$) pour gérer ladite unité périphérique à bande magnétique, ladite unité à circuit dépendant périphérique ayant sa propre unité à horloge de base interne, un système pour réguler les opérations de transfert de données d'une unité périphérique à bande magnétique audit circuit de commande de périphérique, ledit système pour réguler comprenant des moyens de mémoire-tampon (mémoire vive 22) dans ledit circuit de commande de périphérique pour mémoriser temporairement des blocs de données en train d'être transférés, lesdits moyens de mémoire-tampon ayant des voies de connexion à ladite unité périphérique à bande magnétique et audit ordinateur central; des moyens d'état (34$_t$) dans ladite unité de circuit dépendant périphérique pour fournir des données d'information pour indiquer le nombre de blocs de données contenus dans lesdits moyens de mémoire-tampon; des moyens de sortie de signaux (34$_c$) reliés auxdits moyens d'état et fonctionnant pour fournir des signaux à ladite unité de circuit de commande commun; une unité de commande de bande magnétique (50$_{tc}$) reliant une pluralité d'unités périphériques à bande magnétique à ladite unité à circuit dépendant périphérique, et dans lequel ladite unité de commande de bande magnétique fournit des signaux de synchronisation à ladite unité de circuit dépendant périphérique pour le transfert de données auxdits moyens de mémoire-tampon; et des moyens de logique à verrouillage (figure 6) dans ladite unité de circuit dépendant périphérique pour recevoir des données issues de ladite unité de commande de bande magnétique pour le transfert subséquent auxdits moyens de mémoire-tampon, caractérisé en ce que ladite unité à circuit dépendant périphérique comporte des circuits logiques de drapeau (figure 5B) connectés pour recevoir des signaux d'horloge issus de moyens de logique de synchronisation (figure 5A) régulés par des signaux d'horloge issus de ladite unité de commande de bande magnétique pour valider périodiquement lesdits moyens de logique à verrouillage pour transférer des données reçues par ces moyens de logique à verrouillage auxdits moyens de mémoire-tampon, lesdits circuits de logique de drapeau fonctionnant pour élaborer des signaux d'information pour lesdits moyens de logique à verrouillage, de manière à permettre le transfert de données à des registres à verrouillage (51a, 51c) prévus dans lesdits moyens de logique à verrouillage lorsque les données d'entrée qu'ils contenaient sont effacées.

2. Système selon la revendication 1, caractérisé en ce que les moyens de logique à verrouillage incluent un premier registre à verrouillage (51e) pour recevoir des données issues de ladite unité de commande de bande magnétique et pour transférer des données à un deuxième registre à verrouillage (51f) connecté pour introduire des données dans lesdits moyens de mémoire-tampon.

3. Système selon la revendication 2, caractérisé en ce que lesdits cicuits logiques de drapeau incluent des moyens pour recevoir des signaux d'horloge de synchronisation (TCUCLOCK) issus desdits moyens de logique de synchronisation, et pour recevoir le signal d'horloge de base (CLK8/) issu de ladite unité d'horloge de base interne; et des moyens de comptage (151, 152, 153) pour fournir des signaux de données qui représentent l'état courant de chacun des premier et deuxième registres à verrouillage, et pour fournir lesdits signaux de données à une unité de logique de drapeau (154), ladite unité de logique de drapeau fonctionnant pour fournir des signaux d'information auxdits moyens de logique à verrouillage pour indiquer l'état courant desdits premier et deuxième registres à verrouillage comme étant soit disponibles pour des données (vides), soit non disponibles (pleins).

4. Système selon la revendication 2 ou 3, caractérisé en ce que lesdits moyens de logique à verrouillage incluent des moyens à porte (156e, 156f) pour recevoir des signaux d'information d'état issus desdits circuits de logique de drapeau afin de valider périodiquement lesdits premier et deuxième registres à verrouillage pour la réception de données issues de ladite unité de commande de bande magnétique.

5. Système selon la revendication 4, caractérisé en ce que lesdits moyens de logique à verrouillage incluent des moyens pour recevoir des signaux de commande de validation de lecture issus de ladite unité à circuit dépendant périphérique pour indiquer qu'une opération de lecture est en cours de sorte que des données puissent être transférées de ladite unité de commande de bande magnétique audit circuit de commande de périphérique.

6. Système selon la revendication 5, caractérisé en ce que lesdits moyens de logique de synchronisation incluent des moyens (141) pour recevoir des signaux d'horloge de synchronisation issus de ladite unité de commande de bande magnétique, et des moyens (145) pour combiner lesdits signaux de synchronisation de blocs avec lesdits signaux d'horloge de base pour fournir un signal d'horloge (TCLK) pour des opérations d'écriture lorsque des données sont transférées de ladite unité de commande de bande magnétique audit circuit de commande de périphérique.

7. Système selon la revendication 6, caractérisé en ce que lesdits moyens de logique de synchronisation incluent :

(a) des moyens pour fournir un signal de validation de verrouillage (EFLATEN) auxdits premier et deuxième registres à verrouillage, lesdits moyens incluant :

(a1) des moyens de porte (143, 144) pour élaborer ledit signal de validation de verrouillage, lesdits moyens de porte étant sensibles :

(i) audit signal d'horloge de base;
(ii) auxdits signaux d'horloge issus de ladite unité de commande de bande magnétique; et
(iii) à un signal de commande (ENVOYER) issu dudit circuit de commande commun pour signaler l'état "opération de lecture".

**Patentansprüche**

1. In einem Netzwerk, in dem Daten zwischen einem Host-Hauptcomputer (10) und einer Magnetbandperipherieeinheit ($50_{m1}$, $50_{m2}$) über einen Peripheriecontroller ($20_t$) übertragen werden, wobei der Peripheriecontroller durch Befehle vom Host-Computer gestartet wird, um Datenübertragungsoperationen auszuführen, und der Peripheriecontroller eine gemeinsame Steuerschaltungseinheit ($10_c$) zum Sequentialisieren von Mikrocode-Befehlen und eine peripherieabhängige Schaltungseinheit ($80_{p1}$, $80_{p2}$) zum Führen der Bandperipherieeinheit enthält, wobei die peripherieabhängige Schaltungseinheit ihre eigene interne Basistakteinheit besitzt, ein System zum Regeln von Datenübertragungsoperationen von einer Magnetbandperipherieeinheit an den Peripheriecontroller, wobei das Regelungssystem eine Pufferspeichereinrichtung (RAM 22) im Peripheriecontroller zur zeitweiligen Abspeicherung von übertragenen Datenblöcken aufweist, wobei die Pufferspeichereinrichtung Verbindungskanäle zur Bandperipherieeinheit und zum Host-Computer besitzt, eine Statuseinrichtung ($34_t$) in der peripherieabhängigen Schaltungseinheit zur Erzeugung von Informationsdaten, um die Anzahl der in der Pufferspeichereinrichtung befindlichen Datenblöcke anzuzeigen; eine Signalausgabeeinrichtung ($34_c$), die mit der Statuseinrichtung verbunden ist und dazu dient, Statussignale an die gemeinsame Steuerschaltungseinheit zu übermitteln; eine Bandsteuereinheit ($50_{tc}$), die mehrere Magnetbandperipherieeinheiten mit der peripherieabhängigen Schaltungseinheit verbindet, wobei die Bandsteuereinheit Synchronisierungssignale an die peripherieabhängige Schaltungseinheit zum Übertragen von Daten an die Pufferspeichereinrichtung überträgt; und eine Verriegelungslogikeinrichtung (Figur 6) in der peripherieabhängigen Schaltungseinheit zum Empfang von Daten von der Bandsteuereinheit für die nachfolgende Übertragung an die Pufferspeichereinrichtung, dadurch gekennzeichnet, daß die peripherieabhängige Schaltungseinheit einen Flag-Logikschaltkreis (Figur 5B) enthält, der angeschlossen ist, um Taktsignale von einer Synchronisationslogikeinrichtung (Figur 5A) zu empfangen, die durch Taktsignale von der Bandsteuereinheit geregelt wird, damit die Verriegelungslogikeinrichtung periodisch in die Lage versetzt wird, die durch die Verriegelungslogikeinrichtung empfangenen Daten an die Pufferspeichereinrichtung zu übertragen, wobei der Flag-Logikschaltkreis dazu dient, Informationssignale für die Verriegelungslogikeinrichtung zu entwickeln, um eine Datenübertragung an Latchregister (51a, 51c) in der Verriegelungslogikeinrichtung zu ermöglichen, wenn sie bezüglich der vorherigen Dateneingangssignale gelöscht werden.

2. System nach Anspruch 1, bei welchem die Verriegelungslogikeinrichtung ein erstes Latchregister (51d) zum Empfang von Daten von der Bandsteuereinheit und zur Übertragung von Daten an ein zweites Latchregister (51f) enthält, welches angeschlossen ist, um Daten in die Pufferspeichereinrichtung zu geben.

3. System nach Anspruch 2, bei welchem der Flag-Logikschaltkreis eine Einrichtung, um Taktsynchronisierungssignale (TCUCLOCK) von der Synchronisationslogikeinrichtung zu empfangen und das Basistaktsignal (CLK8/) von der internen Basistakteinheit zu empfangen; und eine Zähleinrichtung (151, 152, 153) zur Erzeugung von Datensignalen, die den augenblicklichen Status jedes der ersten und zweiten Latchregister repräsentiert, und zur Übertragung dieser Datensignale an die Flag-Logikeinheit (154) enthält; wobei die Flag-Logikeinheit arbeitet, um Informationssignale an die Verriegelungs-Logikeinrichtung zur Anzeige des augenblicklichen Status der ersten und zweiten Latchregister als verfügbar für die Daten (leer) oder nicht verfügbar (voll) zu übertragen.

4. System nach Anspruch 2 oder Anspruch 3, bei welchem die Verriegelungs-Logikeinrichtung Gattermittel (156e, 156f) enthält, um Statusinformationssignale von dem Flag-Logikschaltkreis zu empfangen, um die ersten und zweiten Latchregister für den Empfang der Daten von der Bandsteuereinheit periodisch in die Lage zu versetzen.

5. System nach Anspruch 4, bei welchem die Verriegelungs-Logikeinrichtung Mittel enthält, um Leseaktivierungs-Steuersignale von der peripherieabhängigen Schaltungseinheit zu empfangen, um anzuzeigen, daß eine "Lese"-Operation nun durchgeführt wird, so daß die Daten von der Bandsteuereinheit zum Peripheriecontroller übertragen werden können.

6. System nach Anspruch 5, bei welchem die Synchronisationslogikeinrichtung eine Einrichtung (141), um Synchronisierungtaktsignale von der Bandsteuereinheit zu empfangen; und eine Einrichtung (145) enthält, um die Synchronisierungsblocksignale mit dem Basistakt zu kombinieren, um ein Taktsignal (TCLK) für "Lese"-Operationen zu erzeugen, wobei Daten von der Bandsteuereinheit an den Peripheriecontroller übertragen werden.

7. System nach Anspruch 6, bei welchem die Synchronisationslogikeinrichtung enthält:
   (a) eine Einrichtung zur Übertragung eines Latchaktivierungssignals (EFLATEN) an die ersten und zweiten Latchregister, wobei die Einrichtung enthält:
      (a1) Gattermittel (143, 144) zur Erzeugung des Latchaktivierungssignals, wobei die Gattermittel ansprechen auf:
         (i) den Basistakt;
         (ii) die Taktsignale von der Bandsteuereinheit; und
(iii) ein Steuersignal (SEND) von der gemeinsamen Steuerschaltung, um den "Leseoperations"-Zustand zu signalisieren.

# FIG.1.

# FIG.2. (CFE CARD)

EP 0 117 682 B1

# FIG.3A (PDB CARD 1.)

80pl

μCODE ≫ —/16— C REG. 58c —/16— AUTO INCREMENT P REGISTER ~50i

AUWE /

CLATEN /    CNTP/

I.D. JUMPERS

58 —/8—

BINARY-BCD ADDRESS DECODE

WRAPP 9
WRAPP 8
PROMIN

PROMS 32j

BUSS /

LOADP/
CNTP

SMTPAD /

18
BUSS
SREG

P-ADDRESS REG → Pa → P CARRY

AUTOMATIC R/W SELECTION LOGIC & CONTROL

→ AUWREN
→ AURDEN

12

WRAPAROUND P COUNTER

AULGFLAG — SEND FROM MICROCODE

LOAUS /
CNTS

SMTPAD /

PRIF

S-ADDRESS REG. → 12 → Sa → S CARRY

RAMAD

HOST 10 → DBUS ≫ —/17— DBUSS    38

B-LATCH
33b —/17—

RAM 22 → RAMXN ≫ —/17— 22a

A-LATCH
33a

LOAD B

P CARRY
S CARRY

BLK. CNTR. LOGIC 33c

PRIF ≫ PRIF /17

ACLK1
/ATEN1

R/W CONTROL

AUWE /

CYCLE (READ) ~50s

MUXSLAB
SMTPAD

TCLKFLAG
AURDEN

# FIG.3.

| FIG.3A. 3/ | FIG.3B. 4/ |

18

# FIG.3B.(PDB CARD 1.)

BURST COUNTER

$36_c$

F/F $36_f$

AF

$80_{p1}$

>> COUNT-FF

>> BUFEND/

BUSS

BUSS
SREG
PRIF
BLAT

$32_x$  4 MUX

INRAM

17

ALU

$32_u$

16

I

17

>> F·0

>> RAM·DATA

>> RAMAD

52)  10

RAMAD

PERIPHERAL UNIT
HOST IO

-> PERIPHERAL UNIT
-> HOST IO

VIA CFE I'

$22$

BLOCK COUNTER

S0(DOWN)

$34_c$

S1(UP)

6BLKFUL

1BLKFUL

AUWREN

HOST ACCESS ERROR

AURDEN

$34_e$

BLOCKERR

μ CODE BRANCH TEST

OPDEC/1

SND/

BLAT

17

OP DECODE

OPX

4

PROMS $32_y$

PARITY $32_c$

>>PERF

OPDECIN  4

NWAY-BRANCH

AF  4

STOPBDL

2-1 MUX $32_z$

OPDEC

SIMSND/

17

OPDEC/

17

HOST

>> DATA(XN)

>> DSIM(XN)

# FIG.4.

(PDB CARD 2)

NOTE: INFO IS A BIDIRECTIONAL BUS

EP 0 117 682 B1

# FIG.5A. SYNCHRONIZATION OF CLOCK FROM TCU.

FROM TCU 50$_{tc}$ ≫ —CLOCK→ REC. 141 —TCUCLOCK→

"1" → J Q — INFLAG
TCUCLOCK → CLK
K $\bar{Q}$ ~142

○ FOR AUTO READ

TCUCLOCK → D Q — TCLK
145
CLK8/ → CLK $\bar{Q}$ — TCLK/

"1" → D Q
146
TCLK/ → CLK $\bar{Q}$

TCLKFLG ○ FOR AUTO WRITE

INFLAG
SEND — 143 ○— 144 — EFLATEN ○(FIG.6.)
CLK8/

# FIG.5B. TCU FLAGS FOR AUTO READ.

COUNT DOWN CONTROL SIGNALS

151 ~
152 ~

TCLK → TCUFLG1 AND TCUFLG2
151
TCUFLG1
TCUFLG2 → COUNT DOWN LOGIC
152
/3

COUNTS UP

AUWE/
WE/ → 155 — CLKCNTDN ○(FIG.6.)

D Q — CTCUFLG1
D Q — CTCUFLG2
153
CLK8/ → CLK

LOGIC
154

TCU FLAG A ○
EFEMPTY ○
EEMPTY ○

(SEE FIG. 5C.)

EP 0 117 682 B1

# FIG.5C.

| CTCU FLG 2 | CTCU FLG 1 | INPUT LATCHES STATUS | | TCUFLGA | EFEMPTY | EEMPTY |
|---|---|---|---|---|---|---|
| | | E-LATCH | F-LATCH | | | |
| 0 | 0 | EMPTY | EMPTY | N | A | N |
| 0 | 1 | EMPTY | FULL | A | N | A |
| 1 | 0 | FULL | FULL | A | N | N |
| 1 | 1 | ERROR | | N | N | N |

A = ACTIVE STATE

N = INACTIVE STATE

EP 0 117 682 B1

# FIG.6. LATCHING LOGIC FOR AUTO READ.

EEMPTY

EFLATEN

156e

LATCHE /

"I"

J    157    Q

K    Q̄

ELATEN/

FROM TCU

51e

E-LATCH

F-LATCH

51f

TO RAM BUFFER 22

EFLATEN

EFLATEN

156f

FLATENA /

EFEMPTY

AURDEN

J    158    Q

CLKCNTDN

K    CLR    Q̄

FLATEN B

FLATENB/

159

FLATEN

CLK8    160

# FIG.7.

CLOCK FROM TCU —— INTERFACE CHIP

"I"

J    Q    INFLAG

F/F

K    142    Q̄

SEND/

EFLATEN

INFLAG ✳ SEND/ = EFLATEN

EFLATEN means Read Operation (✳) & Receipt Of Data Strobe (CLOCK) From The TCU (PERIPHERAL).

EP 0 117 682 B1

# FIG.8.

CLOCK

SYNCHRON. FROM TCU

MEANS DATA AVAILABLE
THIS EDGE PUTS DATA INTO E OR F LATCH.

INFLAG

EFLATEN

OR

ELATEN
(LONE TRUE)

OR

IF EEMPTY = TRUE

FLATEN

IF EFEMPTY = TRUE

EP 0 117 682 B1